# EUROPÄISCHE PATENTSCHRIFT

(11) **EP 3 554 416 B1**
(45) Veröffentlichungstag und Bekanntmachung des Hinweises auf die Patenterteilung: **08.09.2021**
(21) Anmeldenummer: 17808920.7
(22) Anmeldetag: 05.12.2017
(51) Int. Cl.: A61C 3/025

(54) **MISCHKAMMER UND HANDSTÜCK**
MIXING CHAMBER AND HANDPIECE
CHAMBRE DE MÉLANGE ET PIÈCE À MAIN

(30) Priorität: 13.12.2016 DE 102016124212
(43) Veröffentlichungstag der Anmeldung: 23.10.2019
(73) Patentinhaber: Ferton Holding S.A., 2800 Delémont (CH)
(72) Erfinder: DONNET, Marcel, 01630 Saint Jean de Gonville (FR); GUILLAUME, Rigolet, 1025 Saint Sulpice (CH)
(74) Vertreter: Müller Schupfner & Partner Patent- und Rechtsanwaltspartnerschaft mbB
(86) Internationale Anmeldenummer: PCT/EP2017/081478
(87) Internationale Veröffentlichungsnummer: WO 2018/108622

(56) Entgegenhaltungen:
- WO-A1-2007/147552
- AT-B- 314 723
- US-A- 4 595 365
- US-A- 5 094 615

## Beschreibung

Die vorliegende Erfindung betrifft eine Mischkammer für ein Handstück eines medizinischen Geräts, insbesondere eines dentalen Pulverstrahlgeräts, sowie ein Handstück für ein dentales Pulverstrahlgerät.

Bei den in Rede stehenden Pulverstrahl- bzw. Abrasivstrahlgeräten zur Reinigung von Zahnoberflächen existiert das Problem der bei der Behandlung entstehenden Staubentwicklung. So bestehen die zur Zahnreinigung verwendeten Pulver aus sehr feinen Partikeln, welche auf die Zahnoberfläche auftreffen, um dort die entsprechende Reinigungswirkung zu entfalten, gleichzeitig aber auch bei der Behandlung herumwirbeln und sich im Behandlungsraum ablagern. Um dieses Problem zu lösen, ist es aus dem Stand der Technik bekannt, den abrasiven Pulverstrom, insbesondere Pulver-/Luftstrom, mit einem Wasserstrom zu vermischen bzw. zu verwirbeln oder zu umhüllen. Von Vorteil ist es dabei, das Pulver-/Luftgemisch vor dem Auftreffen auf dem Zahn mit Wasser zu umhüllen, danach aber zu vermischen, damit das Pulver aus dem Mund ausgeschwemmt werden kann.

Die US 2004/0202980 A1 offenbart beispielsweise ein Handstück für ein dentales Reinigungsgerät, bei welchem im Handstück eine Kammer für eine reinigende Lösung vorhanden ist, welche zusammen mit einem Luftstrahl auf die Zahnoberfläche aufgebracht werden kann. Der Reinigungseffekt einer derartigen "Mischung" ist aber vergleichsweise gering, da die kinetische Energie des Reinigungsstrahls nicht ausreichend hoch ist. Das Pulver liegt nur in der Lösung (Suspension) vor. Die US 5,094,615 offenbart ein Handstück mit einer Mischkammer, in welcher Wasser und ein abrasives Medium innerhalb des Handstücks vermischt werden. Auch hier ist der Reinigungseffekt eher gering, da das abrasive Medium (Pulverkristalle) viel von seiner kinetischen Energie durch die frühe Mischung mit dem Wasserstrom verliert.

Aus der US 2003 027 100 A1 ist eine Düse bekannt, auf die sich eine Kappe aufsetzen lässt. Über den Zwischenraum zwischen der Düse und der Kappe ist eine Flüssigkeit führbar, die bei Austritt ein Pulverstrahl, der wiederum aus der Düse austritt, ummantelt.

Aus der AT 314 723 ist ein zahnärztliches Mehrfunktionshandstück zur wahlweisen Abgabe von Wasser, Luft oder einem aus Luft und Wasser gebildeten Spray bekannt.

Aus der US 4,595,365 ist eine Düse bekannt, bei der Flüssigkeit und Gas in separaten Kanälen geführt werden, wobei die Kanäle einer gemeinsamen Mischkammer separat zugeführt werden.

Die WO 2007 147 552 A1 betrifft einen Adapter für eine Munddusche, Dabei beruht die Erfindung auf dem Problem, bei einer Munddusche die Möglichkeit zu schaffen, gleichzeitig Wasser und ein Behandlungsmittel im Mund zu versprühen.

Es ist daher eine Aufgabe der vorliegenden Erfindung, eine Mischkammer für ein Handstück eines medizinischen Geräts, insbesondere eines dentalen Pulverstrahlgeräts, sowie ein Handstück für ein dentales Pulverstrahlgerät anzugeben, welche die vorgenannten Nachteile beseitigen und einen schlanken und dünnen Reinigungsstrahl bereitstellen, welcher effektiv und möglichst staubfrei arbeitet.

Diese Aufgabe wird durch eine Mischkammer gemäß Anspruch 1 sowie durch ein Handstück gemäß Anspruch 12 gelöst. Weitere Vorteile und Merkmale ergeben sich aus den Unteransprüchen sowie der Beschreibung und den beigefügten Figuren.

Erfindungsgemäß weist eine Mischkammer für ein Handstück eines medizinischen Geräts, insbesondere eines dentalen Pulver- oder Abrasivstrahlgeräts, eine erste Zuleitung für einen ersten Fluidstrom, insbesondere einen Flüssigkeitsstrom, und eine zweite Zuleitung für einen zweiten Fluidstrom, insbesondere ein Pulver-/Luftgemisch, auf, welche sich zumindest abschnittsweise entlang einer Mittelachse der zweiten Zuleitung erstrecken, wobei die zweite Zuleitung innerhalb der Mischkammer in einem Auslass endet, wobei die Mischkammer im Anschluss an den Auslass bzw. nach dem Auslass (bezogen auf eine Strömungsrichtung) einen Mischbereich aufweist, in welchem bzw. durch welchen der erste Fluidstrom auf den zweiten Fluidstrom gelenkt wird, und wobei die Mischkammer einen Beschleunigungsbereich aufweist, in welchem sich die erste Zuleitung über eine Länge von zumindest 3 mm parallel zur Mittelachse der zweiten Zuleitung erstreckt. Der Abstand zwischen dem Auslass der zweiten Zuleitung und einem Auslass der ersten Zuleitung, d.h. zwischen innerer und äußerer Düse, nimmt einen Wert zwischen 1 und 8 mm an. Erfindungsgemäß bildet die Mischkammer die erste Zuleitung durch eine entsprechend geformte Innenwand aus. Die erste Zuleitung formt den Mischbereich bzw. die ggf. vorhandenen Führungsbereiche, während die zweite Zuleitung noch innerhalb der Mischkammer in dem Auslass endet. Dieser Auslass kann auch als "innere Düse" bezeichnet werden. Das Ende der ersten Zuleitung bzw. der Mischkammer kann als "äußere Düse" bezeichnet werden.

Die Mischkammer bzw. ein Gehäuse der Mischkammer kann gemäß verschiedenen Ausführungsformen beispielsweise aus Metall, Keramik und/oder Kunststoff gefertigt sein, wobei die Form bzw. Kontur der Innenwand beispielsweise gegossen und ggf. nachbearbeitet oder direkt, beispielsweise durch Bohren oder Fräsen oder 3-D Print, hergestellt sein kann. Bei der Mittelachse handelt es sich gemäß einer bevorzugten Ausführungsform insbesondere um eine Rotationsachse der Mischkammer. Die Mischkammer kann die zweite Zuleitung umfassen bzw. ausbilden, die zweite Zuleitung kann aber auch ein gesondertes Bauteil sein, welches in oder an der Mischkammer bzw. an dessen Gehäuse entsprechend angeordnet ist bzw. umgekehrt. Gemäß einer Ausführungsform ist die Mischkammer/das Gehäuse z. B. auswechselbar ausgebildet, wodurch ermöglicht wird, das z. B. Mischkammern unterschiedlicher Dimensionen, angepasst z. B. an die Art des verwendeten Pulvers, an das Handstück angeordnet, z. B. geschraubt oder gesteckt, werden können.

Als Flüssigkeitsstrom/erster Fluidstrom kommt gemäß einer bevorzugten Ausführungsform Wasser zum Einsatz. Als (Zahnreinigungs-)Pulver können durch die vorteilhafte Ausgestaltung der Mischkammer auch Pulver mit sehr kleinen Partikelgrößen, beispielsweise kleiner als 25 µm, bis hinunter zu etwa 12 µm, oder noch kleiner, verwendet werden. Als besonders vorteilhaft hat sich das Vorsehen des Beschleunigungsbereichs erwiesen, da dadurch die kinetische Energie des Flüssigkeitsstroms erhöht bzw. aufrechterhalten werden kann. Der energiereiche erste Fluidstrom wird über den Mischbereich in Richtung bzw. auf den zweiten Fluidstrom gelenkt, wobei er diesem dabei keine Energie entnimmt, dadurch dass er selbst durch den Beschleunigungsbereich ein hohes Energieniveau hat. Anders ausgedrückt "bremst" der erste Fluidstrom den zweiten Fluidstrom also nicht und es entsteht ein idealer Reinigungsstrahl, welcher sich nach dem Austritt aus der Mischkammer nicht oder nur geringfügig aufweitet. Aus dem Stand der Technik ist es bekannt, für das Mischen der beiden Ströme bzw. beim Zumischen z. B. den Venturi-Effekt zu nutzen. Dies hat den Nachteil, dass hierbei zumindest einem der beiden Fluidströme Energie entzogen wird. Die Folge ist, dass der entstehende Reinigungsstrahl, welcher den ersten und den zweiten Fluidstrom umfasst, weniger Energie aufweist und insbesondere hinsichtlich seiner Zusammensetzung schwankt. Aufgrund der geringen Geschwindigkeit eines derartigen Reinigungsstrahls weitet sich dieser rasch auf, nachdem er die Mischkammer verlassen hat, woraus eine starke Staubentwicklung bzw. eine weniger präzise Behandlung des Zahns resultiert. Der Beschleunigungsbereich, welcher erfindungsgemäß eine Mindestlänge von wenigstens 3 mm, 4 mm, 5 mm oder mehr aufweist, bewirkt, insbesondere im Zusammenspiel mit der Form der Mischkammer, dass der erste Fluidstrom, wenn er im Mischbereich auf den zweiten Fluidstrom trifft, diesen nicht bremst sondern sich ideal mit entlang diesem ausbildet oder mischt bzw. eine Hülle um ihn bildet. Die Folge ist ein sehr schlanker bzw. feiner Reinigungsstrahl, welcher die Staubentwicklung deutlich reduziert und welcher ein sehr exaktes Arbeiten ermöglicht. Der erste Fluidstrom ummantelt den zweiten Fluidstrom bevorzugt.

In verschiedenen Ausführungsformen sind die Geschwindigkeiten der beiden Fluidströme aufeinander abgestimmt, wobei es je nach Art des verwendeten Pulvers vorteilhaft sein kann, wenn eine Geschwindigkeit des ersten Fluidstroms höher ist als eine Geschwindigkeit des zweiten Fluidstroms.

Zweckmäßigerweise ist die erste Zuleitung eine Druckleitung, welche ausgelegt ist, einen unter Druck stehenden ersten Fluidstrom zum Mischbereich zu führen. Übliche Druckbereiche liegen beispielsweise in einem Bereich von etwa 0 bis 2 bar. Über die Höhe des Drucks kann letztlich auch die Geschwindigkeit des ersten Fluidstroms gesteuert und eingestellt werden. Auch der zweite Fluidstroms steht unter Druck, wobei hier insbesondere ein Luftdruck, beispielsweise in einem Bereich von etwa 1,5 bis 5,5 bar, gemeint ist.

Gemäß einer bevorzugten Ausführungsform weist die erste Zuleitung im Beschleunigungsbereich im Wesentlichen die Form eines Hohlzylinders auf. Mit anderen Worten umschließt/umringt die erste Zuleitung erfindungsgemäß die zweite Zuleitung. Dementsprechend weist die erste Zuleitung im Beschleunigungsbereich einen Innendurchmesser und einen Außendurchmesser auf, wobei der Außendurchmesser der ersten Zuleitung erfindungsgemäß durch die Innenwand der Mischkammer gebildet wird. In verschiedenen Ausführungsformen liegt der Außendurchmesser der ersten Zuleitung im Beschleunigungsbereich z. B. in einem Bereich von etwa 1,2 bis 2,7 mm, zweckmäßigerweise in einem Bereich von etwa 1,4 bis 2,5 mm und vorzugsweise in einem Bereich von etwa 1,4 bis 2 mm. Der Innendurchmesser liegt zweckmäßigerweise in einem Bereich von etwa 0,8 bis 1,5 mm, bevorzugt in einem Bereich von etwa 0,9 bis 1,4 mm und besonders bevorzugt in einem Bereich von etwa 1 bis 1,3 mm.

Bei nicht kreisrunden Zuleitungs- bzw. Mischkammerquerschnitten beträgt der Abstand (von vorne in die Düse gesehen) zwischen der Innenwand der zweiten Zuleitung am Auslass, d.h. der inneren Düse, und der Innenwand des vorderen Führungsbereichs, insbesondere eines End-Auslasses, d.h. der äußeren Düse, 0,1 mm bis 0,4 mm, bevorzugt ca. 0, 2 mm. Gemäß dem Verständnis der Erfindung gelten diese Werte bei nicht runden Düsen und nicht konstanten Abständen im Mittel oder für den überwiegenden Teil der Leitungs- bzw. Düsenabschnitte. Die bevorzugten Werte für die Innendurchmesser bei kreisrunden Leitungsquerschnitten, d.h. Düsen, betragen: Zweite Leitung bzw. innere Düse: min 0,5 mm, max 0,9 mm, bevorzugt 0,65mm; vorderer Führungsbereich bzw. äußere Düse min 0,85, max. 1,5 mm, bevorzugt 1.05mm, besonders bevorzugt, wenn die innere Düse 0,65mm aufweist. Bei nicht kreisrunden Leitungsquerschnitten liegen die bevorzugten Bereiche für die innere Düse bei etwa 0,19 - 0,65 mm², bevorzugt etwa 0,33 mm² und für die äußere Düse bei etwa 0,56 - 1,77 mm², bevorzugt etwa 0,86mm².

Gemäß einer bevorzugten Ausführungsform ist die zweite Zuleitung durch einen Rohrabschnitt gebildet. Es wurde bereits angesprochen, dass die zweite Zuleitung ein separates Bauteil sein kann. Zweckmäßigerweise ist die zweite Zuleitung, wie erwähnt, so ausgebildet, dass die Mischkammer bzw. dessen Gehäuse an oder auf dieser angeordnet, beispielsweise gesteckt, werden kann. Die Mischkammer kann also auch als eine Art Aufsatz verstanden werden, welcher an einen Rohrabschnitt bzw. an ein Gehäuse eines Handstücks aufgesetzt/gesteckt werden kann. Ein Innendurchmesser der zweiten Zuleitung, welcher bevorzugt rund, insbesondere kreisrund, ausgebildet ist, bzw. ein Durchmesser des Auslasses, also der inneren Düse, liegt gemäß verschiedenen Ausführungsformen in einem Bereich von etwa 0,5mm bis 0,9mm, bevorzugt 0,65mm.

Gemäß einer Ausführungsform ist die vorgenannte hohlzylindrische Form der ersten Zuleitung im Beschleunigungsbereich dadurch gebildet, dass die Mischkammer auf oder an eine entsprechende zweite Zuleitung oder auf oder an ein Gehäuse des Handstücks aufgesteckt, angeschraubt etc. ist, wobei eine Außenwand der zweiten Zuleitung den Innendurchmesser der ersten Zuleitung formt.

An dieser Stelle sei erwähnt, dass die erste Zuleitung im Beschleunigungsbereich nicht vollumfänglich die zweite Zuleitung umschließen muss. Die erste Zuleitung kann auch durch eine Vielzahl von axialen Kanälen gebildet sein, welche um die zweite Zuleitung herum angeordnet sind. Die Kanäle können beispielsweise einen runden oder eckigen Querschnitt haben. Die Kanäle können sich auch segmentförmig um die zweite Leitung erstrecken.

Zweckmäßigerweise ist der Mischbereich dadurch gebildet, dass die Innenwand der Mischkammer auf die Mittelachse, insbesondere konisch, zuläuft.

Gemäß bevorzugten Ausführungsformen weist die Innenwand im Mischbereich einen Winkel relativ zu einem Querschnitt der Mischkammer auf, welcher in einem Bereich von etwa 0 bis 80°, bevorzugt in einem Bereich von etwa 0 bis 30° liegt. Der Querschnitt wiederum bezeichnet eine Ebene der Mischkammer, zu der die Mittelachse senkrecht steht. Eine Länge des Mischbereichs, entlang der Mittelachse gemessen, liegt gemäß verschiedenen Ausführungsformen z. B. in einem Bereich von etwa 0,1 bis 0,5 mm. Mit dem Ausdruck "konisch zulaufend" ist gemeint, dass die Innenwand, obwohl zulaufend, gerade verläuft. Die Innenwand kann im Mischbereich aber auch eine konvexe oder konkave Form aufweisen. Möglich ist es auch, in Umfangsrichtung des Mischbereichs eine Wellen- oder Zackenform vorzusehen, um so die Mischung der beiden Fluidströme gegebenenfalls zu beeinflussen. Durch einen gezielten Einsatz dieser Technik ist es möglich, einen Reinigungsstrahl zu erzeugen, welcher nicht symmetrisch in Bezug auf die Mittelachse ausgebildet ist bzw. welcher die Mischkammer nicht im Wesentlichen parallel zur Mittelachse verlässt sondern beispielsweise geneigt oder schräg dazu, was für bestimmte Behandlungssituationen von Vorteil sein kann, beispielsweise um schwer zugängliche Stellen zu erreichen.

Gemäß einer Ausführungsform sind mehrere Mischbereiche vorgesehen, beispielsweise zwei oder drei, welche hintereinander angeordnet sind, wobei die Winkel von Mischbereich zu Mischbereich bevorzugt abnehmen. Alternativ kann der "letzte" Mischbereich auch einen größeren Winkel aufweisen, um ein noch gleichmäßigeres Zumischen zu ermöglichen.

Gemäß einer Ausführungsform sind die erste und die zweite Zuleitung bzw. die Mischkammer zum Handstück relativ zueinander verdrehbar/positionierbar, wodurch der z. B. nicht symmetrische oder schräge Reinigungsstrahl aktiv umgelenkt werden kann.

Gemäß einer Ausführungsform weist die Mischkammer zumindest einen vorderen Führungsbereich auf, welcher zwischen dem End-Auslass und dem Mischbereich angeordnet ist, wobei der vordere Führungsbereich gemäß verschiedenen Ausführungsformen eine Länge zwischen 0 und 0,5 mm aufweist.

Der vordere Führungsbereich wird zweckmäßigerweise ebenfalls durch die Innenwand der Mischkammer gebildet und weist einen Durchmesser auf, welcher bevorzugt einem Außendurchmesser der ersten Zuleitung im Beschleunigungsbereich entspricht. Alternativ bzw. zusätzlich kann vorgesehen sein, mehrere vordere Führungsbereiche, beispielsweise zwei oder drei, vorzusehen, welche jeweils eine Durchmesserverringerung oder -Vergrößerung bewirken, beispielsweise jeweils in einem Bereich von etwa 10 bis 20 %. Dadurch kann, wenn nötig, gezielt Energie des ersten Fluidstroms vor dem Mischbereich abgebaut werden oder es können gezielt Turbulenzen erzeugt werden, um die Bildung des Reinigungsstrahls zu beeinflussen. Insofern kann der vordere Führungsbereich sowohl geometrisch als auch hinsichtlich seiner Funktion dem Mischbereich entsprechen.

Gemäß einer Ausführungsform ist die Länge des vorderen Führungsbereichs einstellbar. Damit kann gezielt auf unterschiedliche Pulver und deren Flugeigenschaften reagiert werden. Um die Verstellbarkeit zu realisieren, ist die Mischkammer/die erste Zuleitung beispielsweise relativ zur zweiten Zuleitung entlang der Mittelachse verschiebbar oder drehbar, beispielsweise über ein entsprechendes Gewinde, gelagert, sodass die Länge entsprechend eingestellt werden kann.

Gemäß einer bevorzugten Ausführungsform weist die Mischkammer zumindest einen hinteren Führungsbereich auf, welcher nach dem Mischbereich angeordnet ist, wobei der hintere Führungsbereich z. B. eine Länge zwischen 0,3 und 1,2 mm aufweist, bevorzugt zwischen 0,5 und 1 mm. Im hinteren Führungsbereich, wo der der Reinigungsstrahl bereits gemischt bzw. gebildet/geformt ist, kann dieser über die Länge des hinteren Führungsbereichs "beruhigt" werden, sodass ein schlanker Strahl erzeugt wird, welcher sich auch nach dem Austritt nicht aufweitet/öffnet. Die Wandung des hinteren Führungsbereich ist bevorzugt im Wesentlichen zylinderförmig ausgebildet, kann aber auch kegelförmig zulaufend oder aufweitend ausgebildet sein, um den Reinigungsstrahl noch einmal gezielt zu formen, bevor er die Mischkammer verlässt. Gemäß einer Ausführungsform weist die Mischkammer mehr als einen hinteren Führungsbereich auf, wobei auch hier gilt, dass sich die Durchmesser der hintereinander angeordneten hinteren Führungsbereiche beispielsweise verringern oder vergrößern können, beispielsweise um etwa 10 bis 20 % von Führungsbereich zu Führungsbereich. Möglich ist es auch, insbesondere bei dem Führungsbereich, welcher letztendlich die Düsenöffnung bildet bzw. diese umfasst, eine entsprechende Innengeometrie vorzusehen, über welche die Form des Reinigungsstrahls gegebenenfalls noch gezielt beeinflusst werden kann. Als vorteilhaft hat es sich erwiesen, beispielsweise axial verlaufende Rillen vorzusehen, um das Umhüllen/Vermischen des ersten und des zweiten Fluidstroms weiter zu intensivieren. Der hintere Führungsbereich kann auch schräg zur Mittelachse verlaufen, um den Reinigungsstrahl entsprechend abzulenken. Die Vorteile eines derart abgelenkten Reinigungsstrahls, insbesondere im Zusammenhang mit einer drehbaren Mischkammer, wurden bereits angesprochen.

Mit Vorteil hat der hintere Führungsbereich einen lichten Durchlass, der gleich oder größer ist als der lichte Durchlass der zweiten Leitung am Auslass, d.h. als der lichte Durchlass der inneren Düse. Mit anderen Worten ist die Oberfläche des jeweiligen Querschnitts, der senkrecht zur Mittelachse liegt, des hinteren Führungsbereichs größer als der der inneren Düse. Das Verhältnis der entsprechenden Oberflächen sollte dabei größer oder gleich 1 aber nicht größer als 1:10, bevorzugt etwa 1 :2,5 sein. Beispielsweise hat die innere Düse dann einen Durchmesser von bevorzugt 0,65mm und die äußere Düse einen Durchmesser von 1,05mm.

Zweckmäßigerweise weist die Mischkammer eine Düsenöffnung auf, wobei ein Düsendurchmesser etwa 30 bis 70 % eines (Außen-)Durchmessers des Beschleunigungsbereichs beträgt. Damit wird sichergestellt, dass der austretende Reinigungsstrahl auch beim Austritt seine kompakte Form beibehält. In bevorzugten Ausführungsformen beträgt ein Durchmesser der Düsenöffnung etwa 0,9 bis 1,7 mm, besonders bevorzugt etwa 1,1 bis 1,5 mm, insbesondere bevorzugt etwa 1,1 bis 1,3 mm. Das gleiche gilt für den (kleinsten) Durchmesser des hinteren Führungsbereichs.

Gemäß einer Ausführungsform weist der vordere Führungsbereich, der Mischbereich und/oder der hintere Führungsbereich zumindest einen, insbesondere radial angeordneten, Zugang oder eine Öffnung/Bohrung auf. Dieser Zugang dient der weiteren Zuführung bzw. dem Ansaugen eines Fluids, wie Luft oder Wasser. Es kann sich beispielsweise um Umgebungsluft handeln, alternativ wäre es aber auch möglich, entsprechende Druckschläuche zur Zuführung von Druckluft/Wasser oder eines (zusätzlichen) Pulver-/Luftgemisches anzuschließen.

In einer bevorzugten Ausführungsform weist die Mischkammer einen vorderen Führungsbereich mit einer Länge von bis zu 0,5 mm auf, welcher über einen Mischbereich in einen hinteren Führungsbereich mit einer Länge von etwa 0,5 bis 1 mm übergeht. Die Neigung der Innenwand des Mischbereichs, bezogen auf einen Querschnitt der Mischkammer, liegt dabei in einem Bereich von etwa 0 bis 30°. Der Innendurchmesser der Mischkammer, geformt durch deren Innenwand, liegt im Beschleunigungsbereich sowie im vorderen Führungsbereich in einem Bereich von etwa 1,4 bis 2 mm. Ein Durchmesser des hinteren Führungsbereich sowie der Düsenöffnung liegt in einem Bereich von etwa 1,4 bis 2 mm. Damit wird ermöglicht, dass das Pulver-/Luftgemisch, welches die eigentliche Reinigungsfunktion bewirkt, keine Energie beim Mischen mit dem Wasserstrahl verliert und sozusagen "nicht gestört" wird. Daneben wird durch die beschriebene Geometrie ein exaktes Mischen und insbesondere Umhüllen des Pulver-/Luftgemisches mit dem Wasserstrom (erster Fluidstrom) ermöglicht, welcher erfolgreich jegliche Staubentwicklung verhindert.

Die vorliegende Düsengeometrie ist sehr kompakt. Der Abstand zwischen dem Auslass und dem End-Auslass, d.h. zwischen innerer und äußerer Düse ist sehr gering, erfindungsgemäß 1-8mm, bevorzugt etwa 2-4mm. Das Verhältnis der Düsendurchmesser, also der Durchmesser der inneren zur äußeren Düse ist ebenfalls gering und beträgt mit Vorteil nur etwa 2:1 - 1:1, bevorzugt etwa 1,5:1. Dadurch wird die äußere Düse bzw. werden die Wände der Mischkammer und des hinteren Führungsbereichs nicht oder nur geringfügig von Pulverpartikeln getroffen und nutzen sich nicht so schnell ab wie beim Stand der Technik.

Die Erfindung bezieht sich auch auf ein Handstück für ein dentales Abrasivstrahlgerät mit einer erfindungsgemäßen Mischkammer. Es gelten die bereits im Zusammenhang mit der Mischkammer genannten Vorteile und Merkmale analog und entsprechend sowie umgekehrt.

Weitere Vorteile und Merkmale ergeben sich aus der nachfolgenden Beschreibung bevorzugter Ausführungsformen der erfindungsgemäßen Mischkammer mit Bezug auf die beigefügten Figuren. Einzelne Merkmale der einzelnen Ausführungsformen können dabei im Rahmen der Erfindung miteinander kombiniert werden.

Es zeigen:
- Figur 1:: eine bevorzugte Ausführungsform einer erfindungsgemäßen Mischkammer;
- Figuren 2a, 2b:: weitere Ausführungsformen von Mischkammern;
- Figur 3:: eine Ausführungsform einer Mischkammer mit zwei hinteren Führungsbereichen;

- Figur 4:: eine Ausführungsform einer Mischkammer mit radialen Zugängen.

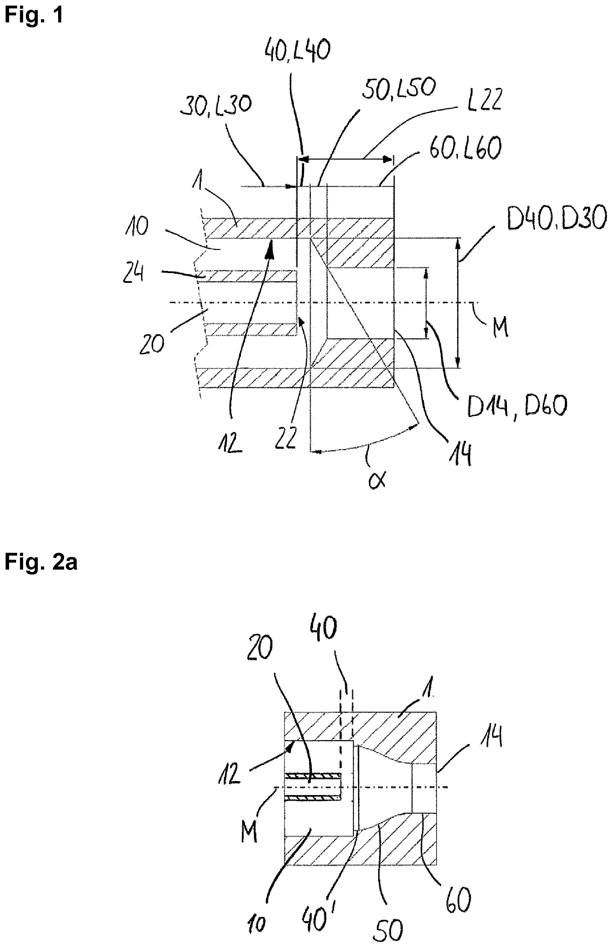

**Fig. 1** zeigt eine bevorzugte Ausführungsform einer Mischkammer mit einem Gehäuse 1, welches eine Innenwand 12 umfasst. Die Mischkammer weist einen Beschleunigungsbereich 30 auf, welcher eine Länge L30 von wenigstens 3 mm entlang einer Mittelachse M aufweist. Im Beschleunigungsbereich 30 erstreckt sich eine im Wesentlichen hohlzylinderförmige erste Zuleitung 10 um eine zweite Zuleitung 20. Die zweite Zuleitung 20 wird durch einen Rohrabschnitt bzw. einen rohrförmigen Abschnitt 24 gebildet, welcher in einem Auslass 22 endet. Dies ist die innere Düse. Entlang der Mittelachse M ist weiter ein Mischbereich 50 mit einer Länge L50 ausgebildet, welcher dadurch geformt ist, dass die Innenwand 12 der Mischkammer in einem Winkel a, bezogen auf einen Querschnitt der ersten Zuleitung 10, der senkrecht zur Mittelachse liegt, verläuft, wobei der Winkel gemäß bevorzugten Ausführungsformen in einem Bereich von etwa 0 bis 30°liegt.

Zwischen dem Mischbereich 50 und dem Beschleunigungsbereich 30 ist ein vorderer Führungsbereich 40 angeordnet, welcher eine Länge L40 aufweist, die in bevorzugten Ausführungsformen etwa 0 bis 0,5 mm beträgt. Nach dem Mischbereich 50 ist ein hinterer Führungsbereich 60 mit einer Länge L60 geformt, welcher einen End-Auslass bzw. äußere Düsenöffnung 14 ausbildet bzw. umfasst, worüber letztendlich der Reinigungsstrahl die Mischkammer verlässt. Die äußere Düsenöffnung 14 weist einen Düsendurchmesser D14 auf, welcher z. B. in einem Bereich von etwa 1,1 bis 1,5 mm, bevorzugt in einem Bereich etwa 1,1 bis 1,3 mm, liegt. Ein Durchmesser D30 der ersten Zuleitung 10 im Beschleunigungsbereich 30 bzw. ein Durchmesser D40 des vorderen Führungsbereichs 40 liegt in bevorzugten Ausführungsformen in einem Bereich von etwa 1,4 bis 2,5 mm, in besonders bevorzugten Ausführungsformen in einem Bereich von etwa 1,4 bis 2 mm.

**Fig. 2a** zeigt eine weitere Ausführungsform einer Mischkammer. Als Besonderheit ist hier ein Mischbereich 50 offenbart, welcher ausgelegt ist, den ersten Fluidstrom in Richtung der Mittelachse M zu führen, wobei die Innenwand 12 nicht gerade, sondern etwa bogenförmig/konvex ist. Eine zweite Zuleitung 20 ist derart angeordnet, dass zwei vordere Führungsbereiche 40 und 40' gebildet sind. Die beiden Führungsbereiche 40 und 40' weisen einen unterschiedlichen Durchmesser auf und bilden daher einen Absatz, über welchen gezielt Strömungsenergie des ersten Fluidstroms abgebaut werden kann.

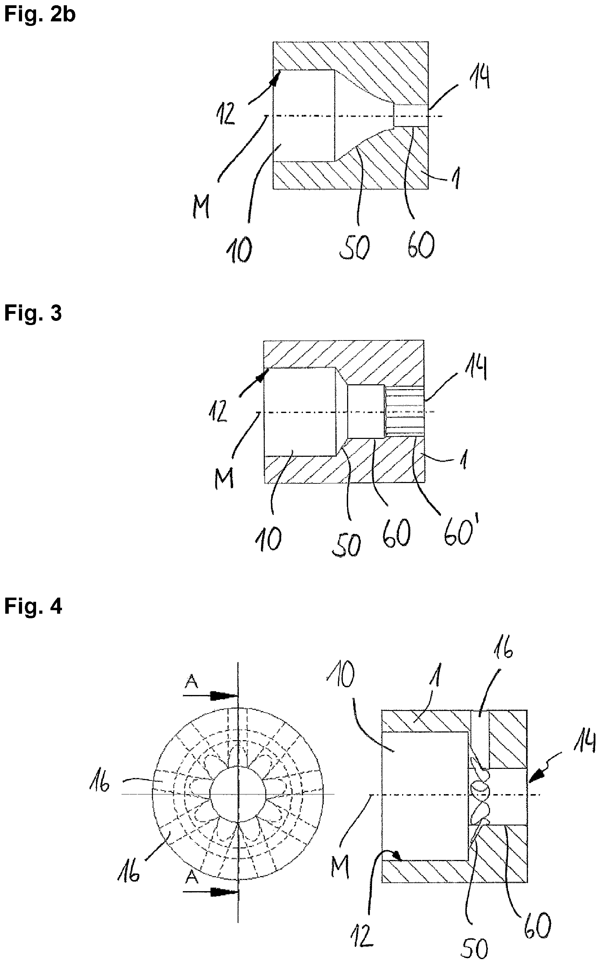

**Fig. 2b** zeigt eine weitere Ausführungsform einer Mischkammer mit einem konvex geformten Mischbereich 50. Als Besonderheit ist hier zwischen dem Mischbereich 50 und dem hinteren Führungsbereich 60 ein Absatz ausgebildet. Die Anordnung einer zweiten Zuleitung ist hier nicht gezeigt. Es wird aber deutlich, dass, je nachdem, wie eine zweite Zuleitung angeordnet wird, ein vorderer Führungsbereich bzw. dessen Dimensionierung beeinflusst werden kann.

**Fig. 3** zeigt eine Ausführungsform einer Mischkammer, welche einen ersten hinteren Führungsbereich 60 und einen zweiten hinteren Führungsbereich 60' aufweist. Als Besonderheit weist der zweite hintere Führungsbereich 60' eine im Wesentlichen gewellte Innenkontur auf.

**Fig. 4** zeigt in einer Frontalansicht und in einem Schnitt A-A eine Mischkammer, welche in einem Mischbereich 50 eine Vielzahl von sich radial erstreckenden Zugängen/Öffnungen 16 aufweist.

Die nicht explizit erwähnten Merkmale der Figuren 2a, 2b, 3 und 4 entsprechen den aus Figur 1 bekannten und sind daher nicht nochmals erwähnt.

### Bezugszeichenliste

- 1: Gehäuse
- 10: erste Zuleitung
- 12: Innenwand
- 14: äußere Düsenöffnung
- 16: Öffnung/Zugang
- 20: zweite Zuleitung
- 22: Auslass / innere Düse
- 24: Rohrabschnitt
- 30: Beschleunigungsbereich
- 40: vorderer Führungsbereich
- 50: Mischbereich
- 60, 60': hinterer Führungsbereich
- L30: Länge Beschleunigungsbereich
- L40: Länge vorderer Führungsbereich
- L50: Länge Mischbereich
- L60: Länge hinterer Führungsbereich
- D30: Durchmesser Beschleunigungsbereich
- D14: Durchmesser äußere Düsenöffnung
- D40: Durchmesser vorderer Führungsbereich
- D60: Durchmesser hinterer Führungsbereich
- M: Mittelachse
- α: Winkel

## Patentansprüche

1. Mischkammer für ein Handstück eines medizinischen Geräts, insbesondere eines dentalen Pulverstrahlgeräts,
wobei die Mischkammer eine erste Zuleitung (10) für einen ersten Fluidstrom, insbesondere einen Flüssigkeitsstrom, aufweist, und
wobei die Mischkammer eine zweite Zuleitung (20) für einen zweiten Fluidstrom, insbesondere ein Pulver-/Luftgemisch, aufweist,
wobei sich die beiden Zuleitungen (10; 20) zumindest abschnittsweise entlang einer Mittelachse (M) der zweiten Zuleitung (20) erstrecken, wobei die erste Zuleitung (10) die zweite Zuleitung (20) umschließt und wobei ein Außendurchmesser der ersten Zuleitung (10) durch die Innenwand der Mischkammer gebildet wird, und
wobei die zweite Zuleitung (20) innerhalb der Mischkammer in einem Auslass (22) endet,
wobei die Mischkammer nach dem Auslass (22) einen Mischbereich (50) aufweist, in welchem der erste Fluidstrom auf den zweiten Fluidstrom gelenkt wird, und
wobei die Mischkammer einen Beschleunigungsbereich (30) aufweist, in welchem sich die erste Zuleitung (10) über eine vorbestimmbare Länge parallel zur Mittelachse (M) der zweiten Zuleitung (20) erstreckt, **dadurch gekennzeichnet, dass** der Beschleunigungsbereich eine Mindestlänge von 3 mm aufweist und dass der Abstand zwischen dem Auslass (22) der zweiten Zuleitung (20) und einem Auslass (14) der ersten Zuleitung (10), d.h. zwischen innerer und äußerer Düse, einen Wert zwischen 1 und 8 mm annimmt.

2. Mischkammer nach Anspruch 1,
wobei die erste Zuleitung (10) eine Druckleitung ist, die ausgelegt ist, einen unter Druck stehenden ersten Fluidstrom zum Mischbereich (50) zu führen.

3. Mischkammer nach Anspruch 1 oder 2,
wobei die erste Zuleitung (10) im Beschleunigungsbereich (30) im Wesentlichen die Form eines Hohlzylinders aufweist.

4. Mischkammer nach einem der vorhergehenden Ansprüche,
wobei die zweite Zuleitung (20) durch einen Rohrabschnitt (24) gebildet ist, auf oder an dem ein Gehäuse (1) der Mischkammer angeordnet, bevorzugt gesteckt, ist.

5. Mischkammer nach einem der vorhergehenden Ansprüche,
wobei der Mischbereich (50) dadurch gebildet ist, dass eine Innenwand (12) der Mischkammer auf die Mittelachse (M) hin, insbesondere konisch, zuläuft.

6. Mischkammer nach Anspruch 5,
wobei die Innenwand (12) im Mischbereich (50) einen Winkel (a), bezogen auf einen Querschnitt der Mischkammer, aufweist, welcher in einem Bereich von etwa 0 bis 80° liegt.

7. Mischkammer nach einem der vorhergehenden Ansprüche,
wobei die Mischkammer zumindest einen vorderen Führungsbereich (40) aufweist, welcher zwischen dem Auslass (22) und dem Mischbereich (50) angeordnet ist, und
wobei der vordere Führungsbereich (40) eine Länge (L40) bis etwa 0,8 mm aufweist.

8. Mischkammer nach Anspruch 7,
wobei der vordere Führungsbereich (40) einen Durchmesser (D40) von etwa 1,2 bis 2,7 mm aufweist.

9. Mischkammer nach einem der vorhergehenden Ansprüche,
wobei die Mischkammer zumindest einen hinteren Führungsbereich (60) aufweist, welcher nach dem Mischbereich (50) angeordnet ist, und
wobei der hintere Führungsbereich (60) eine Länge (L60) von etwa 0,3-1,2 mm aufweist.

10. Mischkammer nach einem der vorhergehenden Ansprüche,
wobei die Mischkammer eine Düsenöffnung (14) aufweist, und
wobei ein Düsendurchmesser (D14) etwa 30 bis 70 % eines Durchmessers (D30) des Beschleunigungsbereichs (30) beträgt.

11. Mischkammer nach einem der Ansprüche 7-10,
wobei der vordere Führungsbereich (40), der Mischbereich (50) und/oder der hintere Führungsbereich (60) zumindest einen, insbesondere radial angeordneten, Zugang (16) aufweisen.

12. Handstück für ein dentales Pulverstrahlgerät mit einer Mischkammer nach einem der vorhergehenden Ansprüche.

## Claims

1. A mixing chamber for a handpiece of a medical device, in particular a dental powder jet device,
the mixing chamber having a first supply line (10) for a first fluid stream, in particular a liquid stream, and
the mixing chamber having a second supply line (20) for a second fluid stream, in particular a powder/air mixture,
the two supply lines (10, 20) extending at least in sections along a central axis (M) of the second supply line (20), wherein the first supply line (10) encloses the second supply line (20) and an outer diameter of the first supply line (10) is formed by the inner wall of the mixing chamber, and
the second supply line (20) ending inside the mixing chamber in an outlet (22),
the mixing chamber having a mixing region (50) behind the outlet (22) in which the first fluid stream is directed to the second fluid stream, and wherein the mixing chamber has an acceleration region (30) in which the first supply line (10) extends over a pre-definable length parallel to the central axis (M) of the second supply line (20), **characterised in that** the acceleration region has a minimum length of 3 mm, and **in that** the distance between the outlet (22) of the second supply line (20) and an outlet (14) of the first supply line (10), i.e. between the inner and outer nozzle, takes a value between 1 and 8 mm.

2. The mixing chamber according to claim 1,
wherein the first supply line (10) is a pressure line adapted to direct a pressurized first fluid stream to the mixing region (50).

3. The mixing chamber according to claim 1 or 2,
wherein the first supply line (10) in the acceleration region (30) has substantially the shape of a hollow cylinder.

4. The mixing chamber according to one of the preceding claims,
wherein the second supply line (20) is formed by a pipe section (24) at or on which a housing (1) of the mixing chamber is arranged, preferably plugged.

5. The mixing chamber according to one of the preceding claims,
wherein the mixing region (50) is formed by an inner wall (12) of the mixing chamber running towards the central axis (M), in particular conically.

6. The mixing chamber according to claim 5,
wherein the inner wall (12) in the mixing region (50) has an angle (α), relative to a cross-section of the mixing chamber, which is in a range from about 0 to 80°.

7. The mixing chamber according to one of the preceding claims,
wherein the mixing chamber having at least one front guide region (40) arranged between the outlet (22) and the mixing region (50), and wherein the front guide region (40) has a length (L40) to about 0.8 mm.

8. The mixing chamber according to claim 7,
wherein the front guide region (40) has a diameter (D40) of about 1.2 to 2.7 mm.

9. The mixing chamber according to one of the preceding claims,
wherein the mixing chamber has at least one rear guide portion (60) arranged behind the mixing region (50), and
wherein the rear guide portion (60) has a length (L60) of about 0.3-1.2 mm.

10. The mixing chamber according to one of the preceding claims,
wherein the mixing chamber has a nozzle opening (14), and
wherein a nozzle diameter (D14) is about 30 to 70% of a diameter (D30) of the acceleration region (30).

11. The mixing chamber according to one of the claims 7-10,
wherein the front guide region (40), the mixing region (50) and/or the rear guide region (60) have at least one, in particular radially arranged, entrance (16).

12. A handpiece for a dental powder jet device with a mixing chamber according to one of the preceding claims.

## Revendications

1. Chambre de mélange pour une pièce à main d'un appareil médical, en particulier d'un appareil dentaire à jet de poudre,
dans laquelle
la chambre de mélange présente une première conduite d'alimentation (10) pour un premier flux de fluide, en particulier un flux de liquide, et
la chambre de mélange présente une deuxième conduite d'alimentation (20) pour un deuxième flux de fluide, en particulier un mélange poudre/air,
les deux conduites d'alimentation (10 ; 20) s'étendent au moins localement le long d'un axe central (M) de la deuxième conduite d'alimentation (20), la première conduite d'alimentation (10) entourant la deuxième conduite d'alimentation (20), et un diamètre extérieur de la première conduite d'alimentation (10) étant formé par la paroi intérieure de la chambre de mélange, et
la deuxième conduite d'alimentation (20) se termine à l'intérieur de la chambre de mélange dans une sortie (22),
la chambre de mélange présente une zone de mélange (50) en aval de la sortie (22), zone dans laquelle le premier flux de fluide est dirigé vers le deuxième flux de fluide, et
la chambre de mélange présente une zone d'accélération (30) dans laquelle la première conduite d'alimentation (10) s'étend parallèlement à l'axe central (M) de la deuxième conduite d'alimentation (20) sur une longueur prédéterminée,
**caractérisée en ce que**
la zone d'accélération présente une longueur minimale de 3 mm, et la distance entre la sortie (22) de la deuxième conduite d'alimentation (20) et une sortie (14) de la première conduite d'alimentation (10), c'est-à-dire entre des buses intérieure et extérieure, prend une valeur entre 1 et 8 mm.

2. Chambre de mélange selon la revendication 1,
dans laquelle la première conduite d'alimentation (10) est une conduite sous pression adaptée pour acheminer un premier flux de fluide sous pression vers la zone de mélange (50).

3. Chambre de mélange selon la revendication 1 ou 2,
dans laquelle la première conduite d'alimentation (10) présente sensiblement la forme d'un cylindre creux dans la zone d'accélération (30).

4. Chambre de mélange selon l'une des revendications précédentes,
dans laquelle la deuxième conduite d'alimentation (20) est formée par un tronçon de tube (24) sur lequel ou au niveau duquel est disposé, de préférence enfiché, un boîtier (1) de la chambre de mélange.

5. Chambre de mélange selon l'une des revendications précédentes,
dans laquelle la zone de mélange (50) est formée du fait qu'une paroi intérieure (12) de la chambre de mélange se rétrécit vers l'axe central (M), en particulier de manière conique.

6. Chambre de mélange selon la revendication 5,
dans laquelle la paroi intérieure (12) dans la zone de mélange (50) présente un angle (α) par rapport à une section transversale de la chambre de mélange, qui se situe dans une plage d'environ 0 à 80°.

7. Chambre de mélange selon l'une des revendications précédentes,
dans laquelle la chambre de mélange comprend au moins une zone de guidage avant (40) disposée entre la sortie (22) et la zone de mélange (50), et
la zone de guidage avant (40) présente une longueur (L40) allant jusqu'à environ 0,8 mm.

8. Chambre de mélange de la revendication 7,
dans laquelle la zone de guidage avant (40) présente un diamètre (D40) d'environ 1,2 à 2,7 mm.

9. Chambre de mélange selon l'une des revendications précédentes,
dans laquelle la chambre de mélange comprend au moins une zone de guidage arrière (60) disposée en aval de la zone de mélange (50), et
la zone de guidage arrière (60) présente une longueur (L60) d'environ 0,3 à 1,2 mm.

10. Chambre de mélange selon l'une des revendications précédentes,
dans laquelle la chambre de mélange présente une ouverture de buse (14), et un diamètre de buse (D14) est d'environ 30 à 70 % d'un diamètre (D30) de la zone d'accélération (30).

11. Chambre de mélange selon l'une des revendications 7 à 10,
dans laquelle la zone de guidage avant (40), la zone de mélange (50) et/ou la zone de guidage arrière (60) présentent au moins un accès (16), en particulier disposé radialement.

12. Pièce à main pour appareil dentaire à jet de poudre, comprenant une chambre de mélange selon l'une des revendications précédentes.
